Europäisches Patentamt

European Patent Office

Office européen des brevets

(11) Veröffentlichungsnummer: **0 293 620**
**A1**

(12) **EUROPÄISCHE PATENTANMELDUNG**

(21) Anmeldenummer: **88107192.2**

(22) Anmeldetag: **05.05.88**

(51) Int. Cl.⁴: **H04L 27/18**

(30) Priorität: **25.05.87 CH 2011/87**

(43) Veröffentlichungstag der Anmeldung:
**07.12.88 Patentblatt 88/49**

(84) Benannte Vertragsstaaten:
**AT BE CH DE FR GB IT LI NL SE**

(71) Anmelder: **BBC Brown Boveri AG**
**Haselstrasse**
**CH-5401 Baden(CH)**

(72) Erfinder: **Dzung, Dacfrey, Dr.**
**Albisstrasse 1**
**CH-5430 Wettingen(CH)**

(54) **Signalübertragungsverfahren.**

(57) Bei einem Signalübertragungsverfahren werden in einem Sender digitale Daten entsprechend einem gegebenen Verfahren zur kontinuierlichen Phasenmodulation einer Trägerschwingung (CPM) in eine zeitabhängige Hüllkurve umgesetzt, die Hüllkurve mittels der Trägerschwingung über einen Kanal (5) mit einer gegebenen Stossantwort übertragen und dabei von einem additiven, weissen Gauss'schen Rauschen überlagert, in einem Empfänger durch ein kanalspezifisches Filter (6) geschickt und abgetastet (2b) und mit einem Optimierungsalgorithmus (8) eine Folge von geschätzten Symbolen bestimmt.

Bei einer bevorzugten Ausführungsform der Erfindung arbeitet der Optimierungsalgorithmus nach dem Prinzip der grössten Wahrscheinlichkeit. Die dabei ermittelte Folge von schätzten Symbolen ist mit einer kleinst mögichen Fehlerwahrscheinlichkeit behaftet.

In einer anderen bevorzugten Ausführungsform der Erfindung befindet sich vor dem Optimierungsalgorithmus zusätzlich ein linearer Ausgleichsfilter, welches nach dem Prinzip der kleinsten Fehlerquadrate arbeitet.

FIG.1

EP 0 293 620 A1

# SIGNALÜBERTRAGUNGSVERFAHREN

## TECHNISCHES GEBIET

Die Erfindung betrifft ein Signalübertragungsverfahren, bei welchem in einem Sender digitale Daten, die als eine Folge von Symbolen vorliegen, welche Symbole einen gegebenen zeitlichen Abstand T haben und M Werte annehmen können, entsprechend einem gegebenen Verfahren zur kontinuierlichen Phasemodulation einer Trägerschwingung in eine zeitabhängige Hüllkurve $v(t)$ unter Benutzung eines Basisband-Filters $r(t)$ umgesetzt werden, die Hüllkurve $v(t)$ mittels der Trägerschwingung über einen Kanal mit einer gegebenen Stossantwort $h_c(t)$ übertragen und dabei von einem additiven, weissen Gauss'schen Rauschen $w(t)$ überlagert wird, so dass bei einem Empfänger ein Signal $y(t)$ von der Form $y(t) = h_c{}^*v(t) + w(t)$ ("*" bezeichnet ein Faltungsprodukt) vorliegt, das Signal $y(t)$ durch ein adjungiertes Basisband-Filter der Form $r^+(-t)$ (" + " bezeichnet hermitesch adjungiert) gefiltert wird, zu Zeitpunkten kT abgetastet wird, wobei k eine ganze Zahl bezeichnet und durch ein Optimierungsalgorithmus eine Folge von geschätzten Symbolen bestimmt wird.

## STAND DER TECHNIK

Gleichzeitig mit der zunehmenden Verbreitung digitaler Signalverarbeitung wächst das Bedürfnis nach zuverlässigen, effizienten digitalen Signalübertragungsverfahren. Grundsätzlich bieten sich dabei zwei Verfahren an, nämlich eines bei welchem die Amplitude und eines bei welchem die Phase einer Trägerschwingung moduliert wird. Die grössere Bedeutung kommt allerdings einer Phasenmodulation zu, lässt es sich doch zeigen, dass sich bei einem gegebenen Verhältnis von Signal zu Rauschen bei einer Phasenmodulation kleinere Fehlerwahrscheinlichkeiten erzielen lassen als bei einer Amplitudenmodulation.

Eine wichtige Kenngrösse von Signalübertragungsverfahren stellt die bei einer gegebenen Datenübertragungsrate benötigte Bandbreite dar. Diese Grösse nimmt besonders günstige Werte an bei Verfahren, welche nach dem Prinzip der kontinuierlichen Phasenmodulation (CPM) arbeiten.

Ein solches Verfahren wird in "Continous Phase Modulation, Part I and Part II", T Aulin et al, IEEE Trans. Communications, Vol. COM-29, March 1981, beschrieben. Dabei werden digitale Daten mit Hilfe eines CPM-Verfahrens in ein Sendesignal umgesetzt, durch einen Kanal übertragen, wobei das Sendesignal von einem additiven, weissen Gauss'schen Rauschen überlagert wird, und in einem Empfänger demoduliert. Bei der Demodulation geht es darum, die Fehlerwahrscheinlichkeit so klein wie möglich zu halten.

In der obengenannten Druckschrift wird ein idealer Kanal angenommen. In Tat und Wahrheit wird der Kanal aber eine gegebene Uebertragungsfunktion haben, welche eine sogenannte Intersymbolinterferenz (ISI) zur Folge haben wird, d.h. die verschlüsselten Symbole werden nicht unabhängig voneinander sein.

## DARSTELLUNG DER ERFINDUNG

Aufgabe der vorliegenden Erfindung ist es daher, ein Verfahren der eingangs genannten Art zu - schaffen, welches der durch einen nicht idealen Uebertragungskanal bedingten Intersymbolinterferenz Rechnung trägt.

Die Lösung der Aufgabe geht aus dem Kennzeichen des Patentanspruchs 1 hervor.

Der Kern der Erfindung liegt darin, dass das empfangene Signal als erstes durch ein kanalspezifisches Filter geschickt wird, so dass bei der Abtastung ein digitales Signal mit einer hinreichenden Statistik entsteht. Der nachfolgende Optimierungsalgorithmus kann dann je nach Bedarf in optimaler oder suboptimaler Weise ausgelegt werden.

Eine bevorzugte Ausführungsform der Erfindung bezieht sich auf einen Optimierungsalgorithmus, welcher nach dem Prinzip der grössten Wahrscheinlichkeit arbeitet. D.h., dass die durch den Optimierungsalgorithmus ermittelte Folge von geschätzten Symbolen bei einer kleinsten Fehlerwahrscheinlichkeit der gesendeten Folge von Symbolen entspricht. Ein solcher Algorithmus wird optimal genannt.

In einer weiteren, bevorzugten Ausführungsform der Erfindung wird vor dem Optimierungsalgorithmus ein lineares Ausgleichsfilter eingesetzt, welches einer Intersymbolinterferenz in suboptimaler Weise Rechnung trägt. Der Vorteil eines solchen Filters liegt darin, dass mit einem herkömmlichen Optimierungsalgorithmus gearbeitet werden kann, die Intersymbolinterferenz aber trotzdem weitgehend behoben werden kann.

## KURZE BESCHREIBUNG DER ZEICHNUNGEN

Nachfolgend soll die Erfindung unter Berücksichtigung des mathematischen Hintergrundes im Zusammenhang mit der Zeichnung erläutert werden. Es zeigen:

Fig. 1 Blockschaltbild des Signalübertragungsverfahrens,
Fig. 2 Blockschaltbild eines erweiterten Viterbi-Algorithmus,
Fig. 3 Blockschaltbild eines Kompensationsgliedes,
Fig. 4 Blockschaltbild eines Vektormultiplizierers,
Fig. 5 Blockschaltbild eines Symbolvektorgenerators,
Fig. 6 Blockschaltbild eines Empfängers mit linearem Ausgleichfilter,
Fig. 7 Blockschaltbild eines einfachen Viterbi-Algorithmus,
Fig. 8 Blockschaltbild eines linearen Ausgleichsfilters, und
Fig. 9 Darstellung der mittleren Fehlerwahrscheinlichkeit in Abhängigkeit des Verhältnisses von Signal zu Rauschen.

## WEGE ZUR AUSFÜHRUNG DER ERFINDUNG

In einem ersten Ausführungsbeispiel wird ein Signalübertragungsverfahren beschrieben, welches einen Optimierungsalgorithmus benützt, der nach dem Prinzip der grössten Wahrscheinlichkeit (MLSE = Maximum-Likelihood-Sequence-Estimator) arbeitet.

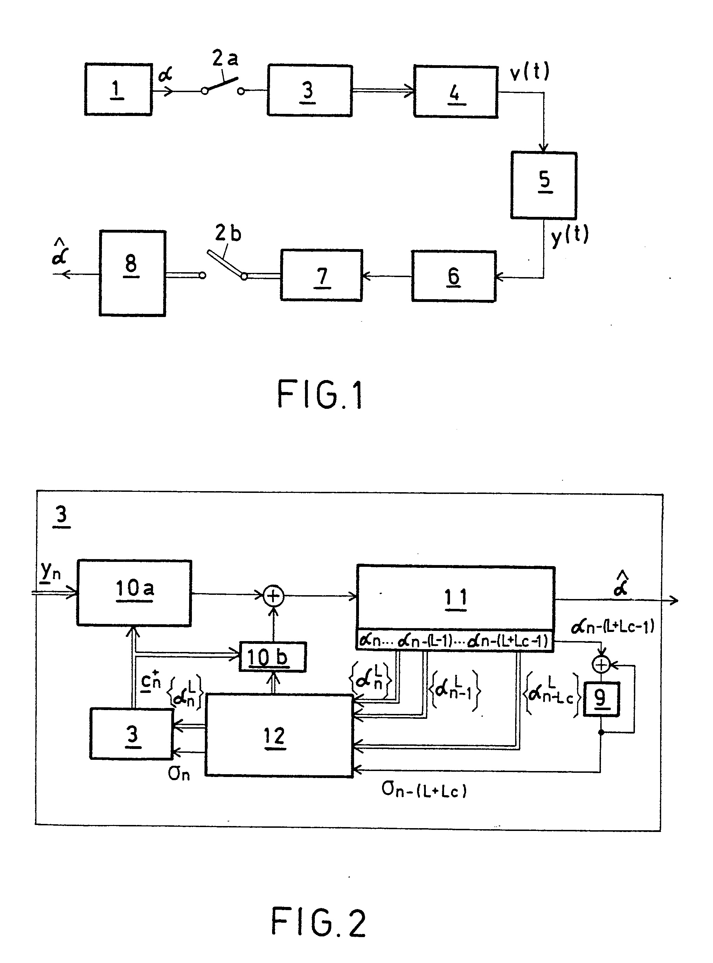

In Fig. 1 ist ein Blockschaltbild eines solchen Signalübertragungsverfahrens gezeichnet. Eine Datenquelle 1 liefert Symbole $\alpha_k$ in einem zeitlichen Abstand T. Jedes Symbol $\alpha_k$ kann M mögliche Werte annehmen. Ohne Einschränkung der Allgemeinheit kann ein Wertebereich auf die M Werte +1, -1, +3, -3, ..., -(M-1) festgesetzt werden. Eine Abtastvorrichtung 2a liefert zu jedem Zeitpunkt kT, wobei k eine ganze Zahl bezeichnet, ein Symbol an einen Symbolvektorgenerator 3. Ein Basisband-Filter 4 erzeugt eine zeitabhängige Hüllkurve v(t).

Die Datenquelle 1, die Abtastvorrichtung 2a, der Vektorgenerator 3 und das Basisband-Filter 4 sind Bestandteile eines Senders.

Mit der Hüllkurve v(t) wird eine Trägerschwingung in bekannter Weise phasenmoduliert und übertragen. Bei der Uebertragung erleidet die Trägerschwingung entsprechend einer gegebenen Uebertragungsfunktion $h_c(t)$ eines Kanals 5 eine Transformation. Dadurch entsteht eine unerwünschte Intersymbolinterferenz (ISI), d.h. dass sich benachbarte Symbole in unerwünschter Weise beeinflussen. Zusätzlich wird die Trägerschwingung von einem additiven, weissen Gauss'schen Rauschen w(t) überlagert.

In einem Empfänger befindet sich ein kanalspezifisches Filter 6, ein adjungiertes Basisband-Filter 7, eine Abtastvorrichtung 2b und ein Optimierungsalgorithmus 8. Die Abtastvorrichtung 2b tastet das Ausgangssignal des adjungierten Basisband-Filters 7 in Zeitabständen kT ab und der Optimierungsalgorithmus 8 liefert geschätzte Symbole $\hat{\alpha}$

Das Signalübertragungsverfahren, insbesondere der im Empfänger ablaufende Teil desselben, soll nun ausführlicher beschrieben werden. Dazu wird der mathematische Formalismus der Basisband-Darstellung benutzt.

In der skalaren Darstellung hat eine phasenmodulierte Trägerschwingung der Frequenz $f_c$ die Form

$$s(t) = Re[exp(j2\pi f_c t)v(t)] \qquad (I)$$

v(t) bezeichnet die komplexe, zeitabhängige Hüllkurve:

$$v(t) = \sum_{k=-\infty}^{+\infty} \exp(j\Phi_k(t)) \tag{II}$$

$$\Phi_k(t) = \pi h \sigma_{k-L} + \sum_{i=k-(L-1)}^{k} 2\pi h \alpha_i q(t-iT) \tag{III}$$

$$\text{mit} \quad kT \leqq t \leqq (k+1)T$$

$$\sigma_k = \sum_{i=-\infty}^{k} \alpha_i$$

$$h = \text{Modulationsindex}$$

v(t) trägt die eigentliche Information. q(t) bezeichnet einen Phasenpuls, welcher sich über eine gegebene Zahl L von Symbolen erstreckt:

$$q(t) = \begin{cases} 0 & \text{für } t \leqq 0 \\ 1/2 & \text{für } t \geqq LT \end{cases} \tag{IV}$$

Eine zur skalaren Darstellung äquivalente Darstellung ist die zur Erläuterung der Erfindung besser geeignete Basisband-Darstellung. Die Hüllkurve v(t) nimmt dann folgende Form an:

$$v(t) = \sum_{k=-\infty}^{+\infty} \underline{c}_k' \, \underline{r} \, (t-kT)$$

($\underline{c}_k'$ bezeichnet den zu $\underline{c}_k$ transponierten Vektor)

Der Vektor $\underline{c}_k$ bezeichnet einen Symbolvektor und hat eine Dimension von $M^L$. Er entsteht durch ein L-faches Kroneckerprodukt von M-dimensionalen Vektoren:

$$\underline{c}_k = \exp(j\pi h\sigma_{k-L}) \, [\underline{a}_k \times \underline{a}_{k-1} \times \ldots \times \underline{a}_{k-(L-1)}] \tag{VI}$$

wobei

$$\underline{a}_k = \begin{bmatrix} \delta_{+1, \, \alpha_k} \\ \delta_{-1, \, \alpha_k} \\ \delta_{+3, \, \alpha_k} \\ \cdot \\ \cdot \\ \cdot \\ \delta_{-(M-1), \, \alpha_k} \end{bmatrix} \qquad (\delta = \text{Kroneckerdelta})$$

$\underline{r}(t)$ ist ein Basisband-Filter und entsteht ebenfalls durch ein L-faches Kroneckerprodukt von M-dimensionalen Vektoren:

4

$$\underline{r}(t) = \underline{d}(t) \times \underline{d}(t+T) \times \ldots \times \underline{d}(t+(L-1)T) \qquad (VII)$$

$$0 \leqq t \leqq T$$

wobei

$$\underline{d}(t) = \begin{bmatrix} \exp(+j2\pi hq(t)) \\ \exp(-j2\pi hq(t)) \\ \exp(+3j2\pi hq(t)) \\ \cdot \\ \cdot \\ \cdot \\ \exp(-(M-1)j2\pi hq(t)) \end{bmatrix}$$

Man beachte, dass der Symbolvektor $\underline{c}_k$ aus einem aufsummierten Phasenteil $\exp(j\pi h\sigma_{k-L})$ besteht und einem Vektor, der eine "1" an derjenigen Stelle hat, welche der Folge der L-Symbole

$$\{\alpha_k^L \triangleq \{\alpha_k, \alpha_{k-1}, \ldots, \alpha_{k-(L-1)}\}$$

entspricht. Die Folge von Symbolvektoren $\{\underline{c}_k\}$ ist eine verallgemeinerte Datenfolge, welche die gesamte Information der Folge von Symbolen $\{\alpha_k\}$ enthält. Das Basisband-Filter $\underline{r}(t)$ erzeugt die Pulsformung. $\underline{r}(t)$ ist nur im Intervall 0...T verschieden von 0. Jede Komponente $\underline{r}(t)$ entspricht dem Puls, welcher aufgrund einer bestimmten Folge von Symbolen $\{\alpha_k^L\}$ entsteht.

Nach dem Durchlaufen des Kanals 5 ist die Hüllkurve $v(t)$ in ein Signal der Form

$$y(t) = h_c * v(t) + w(t) \qquad (IX)$$

("*" bezeichnet das Faltungsprodukt),

d.h. in der Basisbanddarstellung

$$y(t) = \sum_{k=-\infty}^{\infty} \underline{c}_k^{\,!} * \underline{h}(t-kT) + w(t) \qquad (X)$$

mit der Definition

$$\underline{h}(t) \triangleq \int_{-\infty}^{\infty} h_c(\tau)\, \underline{r}(t-\tau)\, d\tau$$

transformiert. Zu $\underline{h}(t)$ kann folgendes gesagt werden: Falls $\underline{h}_c(t)$ in einem Zeitintervall $\tau_0 \leqq 0$ bis $\tau_1 > 0$ verschieden ist von 0, so ist $\underline{h}(t)$ in einem Zeitintervall $\tau_0$ bis $\tau_1 + T$ verschieden von 0. Das bedeutet, dass die Terme in (X) überlappen. Man spricht deshalb von einer Intersymbolinterferenz.

Um aus dem Signal $y(t)$ ein Folge von geschätzten Symbolen $\{\widehat{\alpha}_k\}$ zu erhalten, muss das Signal abgetastet werden. Vor dem Abtasten wird das Signal aber durch das adjungierte Basisband-Filter 7 geschickt.

Der Kern der Erfindung liegt nun darin, das zeitkontinuierliche Signal $y(t)$ vor dem Abtasten so zu filtern, dass durch das Abtasten eine digitale Signalfolge entsteht, welche eine hinreichende Statistik besitzt. Dies lässt sich mit einem kanalspezifischen Filter 6 erreichen, welches eine Stossantwort $\underline{h}_c^+(-t)$ besitzt und sich vor dem adjungierten Basisband-Filter 7 befindet.

Durch Abtastung zu Zeitpunkten $kT$ erhält man damit die digitale Signalfolge $\{\underline{y}_k\}$ wobei

$$\underline{y}_k \triangleq \int_{-\infty}^{\infty} \underline{h} \ast (\tau - kT) y(\tau) d\tau \qquad (XI)$$

$$\underline{y}_k = \sum_{i=-\infty}^{+\infty} X_{k-i} \underline{c}_i + \underline{w}_k$$

wobei

$$X_{k-i} \triangleq \int_{-\infty}^{\infty} \underline{h} \ast (\tau - kT) \underline{h}'(\tau - iT) d\tau \qquad (XII)$$

und

$$\underline{w}_k \triangleq \int_{-\infty}^{\infty} \underline{h} \ast (\tau - kT) w(\tau) d\tau \qquad (XIII)$$

$X_{k-i}$ sind Operatoren, welche die Form einer $M^L \cdot M^L$ Matrix haben. Falls $\underline{h}(t)$ (siehe Formel (X)) verschieden von 0 ist in einem Intervall $\tau_0 - \tau_1 + T$, dann gilt

$$X_{k-i} \quad \begin{cases} \neq 0 & \text{falls } |k-i| \leq L_c \\ = 0 & \text{sonst} \end{cases} \qquad (XIV)$$

wobei $L_c$ die grösste ganze Zahl ist, für welche gilt

$L_c T < T + \tau_1 - \tau_0$

$L_c$ ist die Interferenzlänge des Kanals. Die Formel (XI) vereinfacht sich somit auf

$$\underline{y}_k = \sum_{i=-L_c}^{L_c} X_i \underline{c}_{k-i} + \underline{w}_k \qquad (XV)$$

Die Folge $\{\underline{w}_k\}$ ist eine Folge von mittelwertfreien, komplexen Gauss'schen Zufallsvektoren mit einer Korrelation

$E[\underline{w}_k, \underline{w}_i] = 2N_0 X_{k-i} \qquad (XVI)$

wobei $N_0$ die spektrale Leistungsdichte des skalaren, komplexen weissen Rauschens $w(t)$ ist. Die Folge $\{\underline{w}_k\}$ ist im allgemeinen nicht weiss.

Nachfolgend soll der Optimierungsalgorithmus 8 in Ausführungsbeispielen näher beschrieben werden.

Gemäss einer bevorzugten Ausführungsform der Erfindung arbeitet der Optimierungsalgorithmus nach dem Prinzip der grössten Wahrscheinlichkeit. Bei einem gegebenen Signal $y(t)$ wird die Hüllkurve $v(t)$ geschätzt, welche eine Wahrscheinlichkeitsfunktion $p_w$ maximiert. Aus Formel (IX) folgt

$$\text{Log } p_w(y(t)|v(t)) = -|\gamma_1| \int_{-\infty}^{+\infty} |y(t) - h_c \ast v(t)|^2 dt + \gamma_2 \qquad (XVII)$$

$\gamma_1$ und $\gamma_2$ sind Konstanten, welche in diesem Zusammenhang bedeutungslos sind.

Nun setzt man (X) in (XVII) ein, verwendet (XI), (XII) und die Tatsache, dass die Matrixfolge $\{X_k\}$ hermitesch ist, sammelt die Terme, welche von Symbolvektoren $\underline{c}_k$ abhängen und erhält eine Metrik $J_n$

$J_n\{\underline{c}_k\} = J_{n-1}\{\underline{c}_k\} + Z_n\{\underline{c}_k\} \qquad (XVIII)$

wobei

$$Z_n\{\underline{c}_k\} = 2 \text{ Re } \underline{c}_n^+ \underline{y}_n - \underline{c}_n^+ X_0 \underline{c}_n - 2 \text{ Re } \underline{c}_n^+ \sum_{i=1}^{L_c} X_i \underline{c}_{n-i} \qquad (XIX)$$

EP 0 293 620 A1

Werden die Symbolvektoren $\underline{c}_n$ ... $\underline{c}_{n-L}$ so bestimmt, dass $J_n$ maximal ist, dann hat man gleichzeitig v(t) so bestimmt, dass $p_w$ maximal ist. Folglich ist eine Folge von geschätzten Symbolen $\{\widehat{\alpha_k}\}$ so bestimmt, dass sie mit der kleinsten, möglichen Fehlerwahrscheinlichkeit der von der Datenquelle 1 gelieferten Folge von Symbolen $\{\alpha_k\}$ entspricht.

Die Folge von Symbolvektoren $\underline{c}_n$ ... $\underline{c}_{n-L}$ kann mit einem erweiterten Viterbi-Algorithmus ermittelt werden. Ein Viterbi-Algorithmus ist z.B. in der eingangs genannten Druckschrift offenbart.

Fig. 2 zeigt ein Blockschaltbild eines Optimierungsalgorithmus, welcher nach dem Prinzip der grössten Wahrscheinlichkeit arbeitet. Die einfachen Pfeile kennzeichnen den Datenfluss komplexer, skalarer Grössen. Doppelt gezeichnete Pfeile kennzeichnen den Datenfluss von vektorwertigen Grössen und bestehen im allgemeinen aus einer der Zahl der Vektorkomponenten entsprechenden Anzahl paralleler, skalarer Datenleitungen.

Ein Viterbi-Algorithmus 11 erzeugt Symbole $\alpha_n$ ... $\alpha_{n-(L+L_c-1)}$, welche z.B. in der Form von Folgen $\{\alpha_n^L\}$, ... $\{\alpha_{n-L}^L\}$ an ein Kompensationsglied 12 weitergegeben werden. Das Kompensationsglied 12 errechnet einen Korrekturvektor der Form

$$\underline{g}_n = \frac{1}{2} X_0 \underline{c}_n + \sum_{i=1}^{L_c} X_i \underline{c}_{n-i} \qquad (XX)$$

Ein Symbolvektorgenerator 3 erzeugt $\underline{c}_n^+$; ein Vektormultiplizierer 10a erzeugt das Skalarprodukt $\underline{c}_n^+ y_n$. In einem Vektormultiplizierer 10b wird das Skalarprodukt $\underline{c}_n^+ g_n$ ausgerechnet. Die von den beiden Vektormultiplizierer 10a, 10b gelieferten Werte werden summiert und an den Viterbi-Algorithmus 11 zurückgeführt, welcher die Summe mit 2 multipliziert und den Realteil des Resultats, nämlich das Inkrement $Z_n$, bildet. In jedem Takt kT bestimmt der Viterbi-Algorithmus 11 unter allen möglichen Symbolen $\alpha_n$ ... $\alpha_{n-(L+L_c-1)}$ diejenigen, welche das Inkrement $Z_n$ maximieren. Ein Integrator, welcher z.B. mit einem Schieberegister 9 gebildet werden kann, erzeugt die Grösse $\sigma_{n-(L+L_c)}$, welche ebenfalls in das Kompensationsglied 12 eingeführt wird.

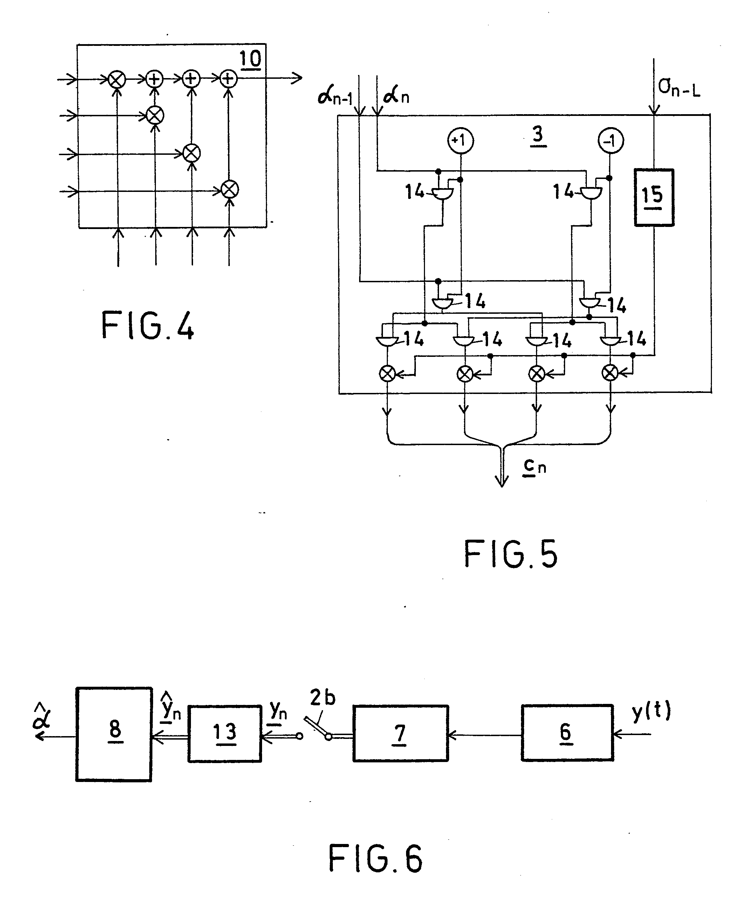

Fig. 4 zeigt beispielhaft den Ausbau eines Vektormultiplizierers für $M^L = 4$. Die $M^L$ parallelen, skalaren Eingänge des Vektormultiplizierers entsprechen jeweils einem vektorwertigen Doppelpfeil, wie er in Fig. 2 benutzt wird.

Fig. 5 zeigt beispielhaft den Aufbau eines Symbolvektorgenerators 3 für $M = 2$ und $L = 2$. Eingangsgrössen sind $\alpha_n$ und $\alpha_{n-1}$ und $\sigma_{n-L}$. Die Eingangsgrössen $\alpha_n$ und $\alpha_{n-1}$ werden in der dargestellten Weise miteinander und mit den Werten des Wertebereichs, in diesem Fall +1 und -1, mittels logischer UND-Gatter 14 verknüpft. Zusammen mit einem multiplikativen Faktor $\exp(j\pi h\sigma_{n-2})$, welcher in einem Exponentialglied 15 erzeugt wird, ergeben sich 4 Ausgangsgrössen, welche die einzelnen Komponenten des Symbolvektors $\underline{c}_n$ bilden.

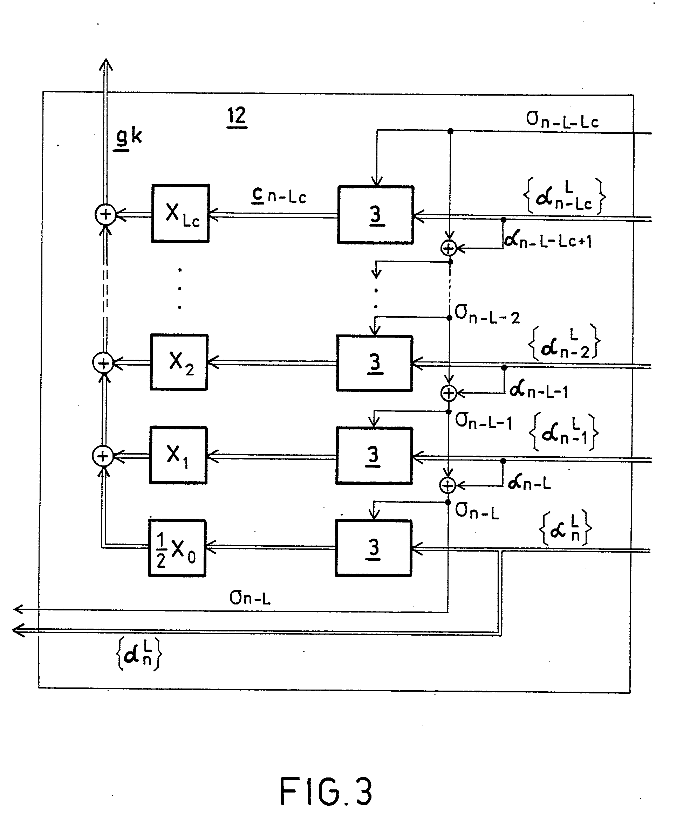

Fig. 3 zeigt das Blockschaltbild des Kompensationsgliedes 12. Die Eingangsgrössen sind $\sigma_{n-L-L_c}$ und die $L_c+1$ Folgen von Symbolen $\{\alpha_n^L\}$ ... $\{\alpha_{n-L}^L\}$. Das Kompensationsglied 12 besteht aus $L_c+1$ parallelen Stufen, in welchen jeweils ein Symbolvektor $\underline{c}_{n-i}$ aus einem Symbolvektorgenerator 3 durch einen Operator $X_i$ (gemäss Formel (XII)) transformiert wird. (Man beachte, dass $\underline{c}_n$ mit dem Operator $X_0/2$ transformiert wird.) Die $L_c+1$ Grössen werden addiert und bilden den Korrekturvektor $g_k$. Die $\sigma_{n-L-i}$ werden sukzessive aufgebaut, indem jeweils aus einer Folge von Symbolen $\alpha_{n-i}^L$ das Symbol $\alpha_{n-L-i}$ extrahiert und zu $\sigma_{n-L-i}$ addiert wird. Die Grössen $\sigma_{n-L}$ und $\{\alpha_n^L\}$ werden für den in Fig. 2 gezeigten Symbolvektorgenerator 3 ausgegeben.

In einem weiteren Ausführungsbeispiel soll ein erfindungsgemässes Signalübertragungsverfahren beschrieben werden, bei welchem ein herkömmlicher Viterbi-Algorithmus zusammen mit einem linearen Ausgleichsfilter verwendet wird.

Fig. 6 zeigt ein Blockschaltbild des im Empfänger ablaufenden Teils des Signalübertragungsverfahrens. Ein übertragenes Signal y(t) durchläuft ein kanalspezifisches Filter 7 und ein adjungiertes Basisband-Filter 8, welches eine vektorwertige Ausgangsgrösse $\underline{y}(t)$ liefert. Diese Ausgangsgrösse $\underline{y}(t)$ wird von der Abtastvorrichtung 2b zu Zeitpunkten kT getastet, durch ein lineares Ausgleichsfilter 13 geschickt und - schliesslich von einem herkömmlichen Optimierungsalgorithmus ausgewertet.

Das lineare Ausgleichsfilter 13 transformiert einen digitalen Signalvektor $\underline{y}_k$ in einen entzerrten Signalvektor $\widehat{\underline{y}}_k$. Der entzerrte Signalvektor $\widehat{\underline{y}}_k$ kompensiert die Intersymbolinterferenz nach dem Prinzip der kleinsten Fehlerquadrate. In der Basisband-Darstellung nimmt das lineare Ausgleichsfilter 13 folgende Form an:

$$\hat{\underline{Y}}_k = \sum_{i=L_{eo}}^{L_{e1}} A_i \, \underline{y}_{k-i} \qquad\qquad (XXI)$$

$L_{eo}$, $L_{e1}$ sind frei wählbare, ganze Zahlen. $A_i$ sind komplexe $M^L \cdot M^L$-Matrizen, welche geeignet gewählt werden sollen. Gemäss einer bevorzugten Ausführungsform der Erfindung werden sie so gewählt, dass ein Fehlerquadrat D

$$D(\{A_i\}) = E\,[(\hat{\underline{\gamma}}_k - X_r \underline{c}_k)^+ X_r^{-1} (\hat{\underline{\gamma}}_k - X_r \underline{c}_k)], \qquad (XXII)$$

wobei

$$X_r \triangleq \int_0^T \underline{r}*(\tau) \, \underline{r}'(\tau) \, d\tau$$

minimal wird. Dies ist gleichbedeutend damit, dass das formal nach $A_m$ ($m = L_{eo} \ldots L_{e1}$) abgeleitete Fehlerquadrat D verschwindet:

$$E\,[X_r^{-1} (\hat{\underline{\gamma}}_k - X_r \underline{c}_k) \, \underline{y}_{k-m}^+] = 0. \qquad (XXIII)$$

Setzt man in diese Gleichung Formel (XXI) ein, so entstehen diskrete Wiener-Hopf-Gleichungen:

$$X_r^{-1} \sum_{i=L_{el}}^{L_{e1}} A_i R_{yy}(m-i) = R_{cy}(m) \qquad\qquad (XXIV)$$

$$mit \; m = L_{eo} \cdots L_{e1}$$

$R_{yy}$ und $R_{cy}$ sind Korrelationsmatrizen der Dimension $M^L \cdot M^L$:

$$R_{yy}(m) \triangleq E\,[\underline{y}_k \, \underline{y}_{k-m}^+] \qquad (XXV)$$
$$R_{cy}(m) \triangleq E\,[\underline{c}_k \, \underline{y}_{k-m}] \qquad (XXVI)$$

(Es ist zu beachten, dass die Folge von Symbolvektoren $\{\underline{y}_k\}$ und die Folge von Symbolvektoren $\{\underline{c}_k\}$ stationäre Zufallsvariablen sind.) Die Wiener-Hopf-Gleichungen (XXIV) bilden ein lineares System von Gleichungen, welche die Matrizen $A_i$ bestimmen. Die Lösung dieses Systems kann mit bekannten Methoden der Numerik berechnet werden.

Die Länge $L_e = L_{e1} - L_{eo} + 1$ des Ausgleichsfilters wirkt sich auf die Fehlerwahrscheinlichkeit $P_e$ der Folge von geschätzten Symbolen $\hat{\alpha}$ aus: Je grösse $L_e$ ist, umso kleiner ist die Fehlerwahrscheinlichkeit $P_e$. Ein quantitativer Zusammenhang zwischen $L_e$ und $P_e$ ist allerdings schwierig zuermitteln. In der Regel empfiehlt es sich, $L_e$ in der Grössenordnung der doppelten Interferenzlänge $L_c$ des Kanals 5 (Fig. 1) zu halten.

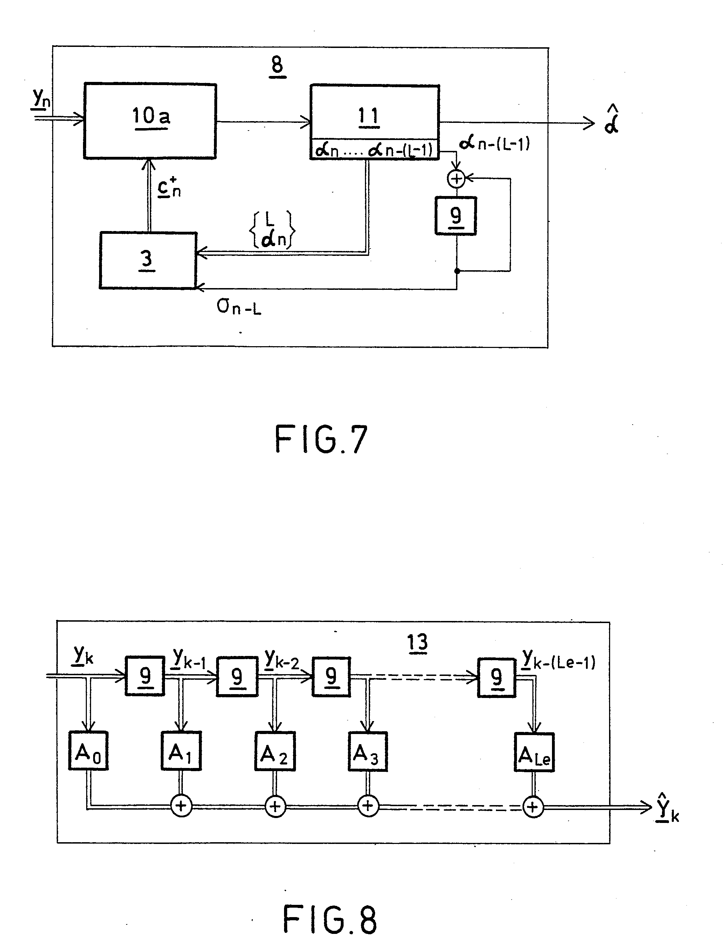

Fig. 8 zeigt das Blockschaltbild eines linearen Ausgleichsfilters. Ein Signalvektor $\underline{y}_k$ durchläuft eine Zahl $L_e$ von Verzögerungsstufen, welche z.B. durch Schieberegister 9 realisiert werden können. In jeder Stufe wird der Signalvektor $\underline{y}_{k-i}$ mit der entsprechenden Transformationsmatrix $A_i$ transformiert. Die transformierten Signalvektoren werden alle addiert, wobei sich der entzerrte Signalvektor $\hat{\underline{y}}_k$ ergibt.

Fig. 7 zeigt das Blockschaltbild eines Optimierungsalgorithmus mit einem Viterbi-Algorithmus, wie er zur Auswertung der entzerrten Signalvektoren $\hat{\underline{y}}_k$ verwendet werden kann.

Ein Viterbi-Algorithmus 11 erzeugt Symbole $\alpha_n \ldots \alpha_{n-(L-1)}$, welche z.B. in der Form eines Vektors $\alpha_n^L$ an einem Symbolvektorgenerator 3 weitergegeben werden. Dieser erzeugt den Symbolvektor $\underline{c}_n^+$. Ein Vektormultiplizierer 10a bildet das Skalarprodukt $\underline{c}_n^+ \, \underline{y}_n$, welches an den Viterbi-Algorithmus 11 zurückgeführt wird. In jedem Takt bestimmt der Viterbi-Algorithmus 11 unter allen möglichen Folgen von Symbolen $\alpha_n \ldots \alpha_{n-(L-1)}$ diejenige Folge, welche das Inkrement $Z_n$

$$Z_n = 2 \, Re \, \underline{c}_n^+ \, \underline{y}_n \qquad (XXVII)$$

maximiert. Ein Integrator, welcher z.B. mit Hilfe eines Schieberegisters 9 verwirklicht werden kann, erzeugt die Grösse $\sigma_{m-L}$, welche ebenfalls zur Berechnung des Symbolvektors $\underline{c}_n^+$ benötigt wird.

Die Leistungsfähigkeit eines Signalübertragungsverfahrens bemisst sich bei gegebenem Verhältnis von Signal zu Rauschen (SNR) nach der Fehlerwahrscheinlichkeit $P_e$ der Folge von geschätzten Symbolen $\{\alpha_k\}$.

Im folgenden sollen die Fehlerwahrscheinlichkeiten $P_e$ von 2 erfindungsgemässen Empfängern, wobei der eine mit einem Optimierungsalgorithmus nach dem Prinzip der grössten Wahrscheinlichkeit und der andere mit einem linearen Ausgleichsfilter ausgestattet ist, mit der Fehlerwahrscheinlichkeit eines herkömmlichen Empfängers verglichen werden.

Vorausgesetzt werden Kanäle, deren Stossantwort von der Form

$$h_c(t) = a(\delta(t) + b \, e^{j\Phi}o \; \delta(t-\tau_s)) \qquad (XXVIII)$$

ist. $\delta(t)$ bezeichnet einen Diracimpuls. Die einzelnen Parameter haben folgende Werte: a = 1
b = 0.5
$\tau_s$ = T/2 ($\rightarrow L_c$ = 1) $\Phi_o = \nu \frac{\pi}{4}$ , $\nu$ = 0,1, ..., 7 $\qquad (XXIX)$

Das Signalübertragungsverfahren benützt ein Basisband-Filter mit einem Phasenpuls, der sich über L = 3 Takte erstreckt und dessen Ableitung die Form eines erhöhten Kosinus hat:

$$\frac{d}{dt} q(t) = \begin{cases} \frac{1}{2LT} (1-\cos(\frac{2\pi t}{LT})), & 0 \leq t \leq LT \\ 0 & sonst \end{cases} \qquad (XXX)$$

Der Modulationsindex ist h = 1/2.

Die Datenquelle liefert Symbole mit Werten +1 oder -1, d.h. M = 2. Bei dem in einem der beiden erfindungsgemässen Empfängern eingebauten linearen Ausgleichfilter ist $L_{eo}$ = 0 und $L_{e1}$ = 4.

Zum Vergleich wird ein Signalübertragungsverfahren, wie es z.B. aus der eingangs genannten Druckschrift bekannt ist, herangezogen.

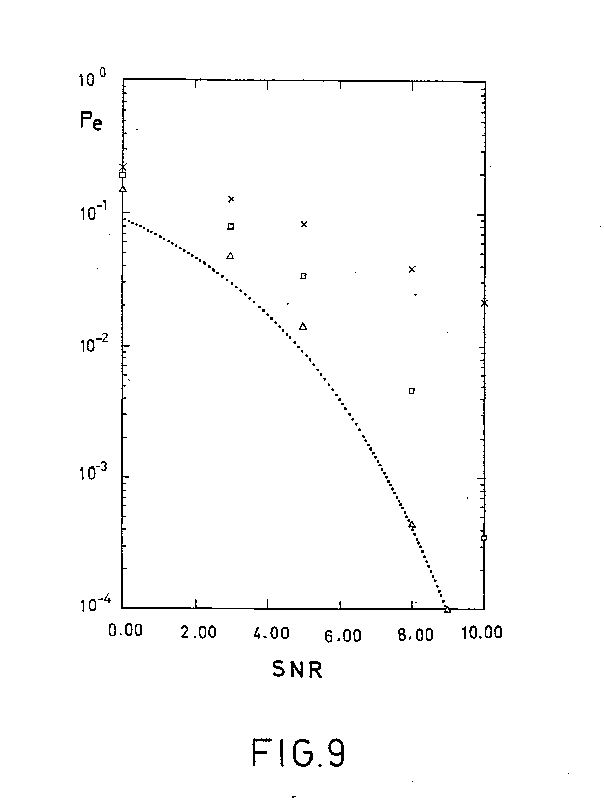

Fig. 9 stellt die Resultate dar, welche durch eine Simulation mit den obengenannten Parametern ermittelt wurden.

Die einzelnen Merkmale bedeuten:

x    Signalübertragungsverfahren entsprechend dem Stand der Technik

△    Erfindungsgemässes Signalübertragungsverfahren mit einem Optimierungsalgorithmus, welcher nach dem Prinzip der grössten Wahrscheinlichkeit arbeitet

□    Erfindungsgemässes Signalübertragungsverfahren mit einem linearen Ausgleichsfilter

Die punktierte Kurve ist eine analytische Approximation der minimalen Fehlerwahrscheinlichkeit für einen idealen Kanal ($L_c$ = 0). Die hier verwendete Approximation wird in der eingangs genannten Druckschrift hergeleitet und ausgewertet.

Die in Fig. 9 eingezeichneten Werte bilden einen Mittelwert der Fehlerwahrscheinlichkeiten der acht verschiedenen Kanäle, wie sie durch die Formeln (XXVIII) und (XXIX) bestimmt werden (variiert wird allein die Phase $\Phi_o$ des Kanals 5).

Es ist klar zu erkennen, dass sich mit einem Optimierungsalgorithmus nach dem Prinzip der grössten Wahrscheinlichkeit die besten Resultate erzielen lassen. Auch die Resultate des linearen Ausgleichsfilters liegen deutlich besser, als diejenigen des bekannten Signalübertragungsverfahrens.

Insgesamt steht mit dem erfindungsgemässen Signalübertragungsverfahren ein Verfahren zur Verfügung, dessen Fehlerwahrscheinlichkeit auch bei der Uebertragung über einen nicht idealen Kanal sich auf einen kleinsten Wert beschränken lässt.

**Ansprüche**

1. Signalübertragungsverfahren, bei welchem in einem Sender

a) digitale Daten, die als eine Folge von Symbolen ($\alpha_k$) vorliegen, welche Symbole einen gegebenen zeitlichen Abstand T haben und M Werte annehmen können,

b) entsprechend einem gegebenen Verfahren zur kontinuierlichen Phasenmodulation einer Trägerschwingung in eine zeitabhängige Hüllkurve (v(t)) unter Benutzung eines Basisband-Filters (r(t)) umgesetzt werden,

c) die Hüllkurve (v(t)) mittels der Trägerschwingung über einen Kanal (5) mit einer gegebenen Stossantwort ($h_c(t)$) übertragen und dabei von einem additiven, weissen Gauss'schen Rauschen (w(t)) überlagert wird, so dass bei einem Empfänger ein Signal (y(t)) von der Form

$$y(t) = h_c^* v(t) + w(t)$$

("*" bezeichnet ein Faltungsprodukt)

vorliegt,

d) das Signal (y(t)) durch ein adjungiertes Basisband-Filter (7) der Form

$$\underline{r}^+(-t)$$

("+" bezeichnet konjugiert komplex)

gefiltert wird,

e) zu Zeitpunkten kT abgetastet wird, wobei k eine ganze Zahl bezeichnet,

f) und durch ein Optimierungsalgorithmus eine Folge von geschätzten Symbolen ($\widehat{\alpha_k}$) bestimmt wird,

dadurch gekennzeichnet, dass g) vor das adjungierte Basisband-Filter (7) ein kanalspezifisches Filter (6) der Form

$$h_c^*(-t)$$

eingesetzt wird.

2. Signalübertragungsverfahren nach Anspruch 1, dadurch gekennzeichnet, dass der Optimierungsalgorithmus die Folge von geschätzten Symbolen ($\widehat{\alpha_k}$) nach dem Prinzip der grössten Wahrscheinlichkeit bestimmt.

3. Signalübertragungsverfahren nach Anspruch 2, dadurch gekennzeichnet, dass der Optimierungsalgorithmus ein durch ein Kompensationsglied erweiterter Viterbi-Algorithmus ist.

4. Signalübertragungsverfahren nach Anspruch 3, dadurch gekennzeichnet, dass das Kompensationsglied im Viterbi-Algorithmus eine Korrektur der Form

$$-\underline{c}_n^+ X_o \underline{c}_n - 2\,Re\; \underline{c}_n^+ \sum_{i=1}^{L_c} X_i \underline{c}_{n-i}$$

$\underline{c}_n$ = Symbolvektor,

$\underline{y}_n$ = Signalvektor

$X_i$ = Kanaloperator

$L_c$ = Kanalinterferenzlänge ausführt.

5. Signalübertragungsverfahren nach Anspruch 1, dadurch gekennzeichnet, dass sich vor dem Optimierungsalgorithmus ein lineares Ausgleichsfilter (13) befindet, welches nach dem Prinzip der kleinsten Fehlerquadrate arbeitet in dem Sinn, dass der Erwartungswert

$$E\,[\,(\widehat{\underline{y}}_k - X_r\underline{c}_k)^+ X_r^{-1}\,(\widehat{\underline{y}}_k - X_r\underline{c}_k)\,]$$

$\widehat{\underline{y}}_k$ = entzerrter Signalverkehr

$X_r$ = Kanaloperator des weissen Kanals

$\underline{c}_k$ = Symbolvektor

minimiert wird.

6. Signalübertragungsverfahren nach Anspruch 5, dadurch gekennzeichnet, dass der Optimierungsalgorithmus ein Viterbi-Algorithmus ist.

FIG.1

FIG.2

FIG.3

FIG.4

FIG.5

FIG.6

FIG.7

FIG.8

87/048

FIG.9

**Europäisches Patentamt**

# EUROPÄISCHER RECHERCHENBERICHT

Nummer der Anmeldung

EP 88 10 7192

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 050 930 (PLESSEY) <br> * Seite 5, Zeile 23 - Seite 7, Zeile 11; Seite 8, Zeile 5 - Seite 9, Zeile 2 * <br> --- | 1-3,5,6 | H 04 L 27/18 |
| A | INTERNATIONAL CONFERENCE ON COMMUNICATIONS, ICC '79, Boston, 10. - 14. Juni 1979, Band 2, Seiten 25.3.1 - 25.3.5, IEEE, New York, US; C. WONG et al.: "Optimal short impulse response channels for an MLSE receiver" <br> * Seite 25.3.2, linke Spalte, Zeilen 14-32; Seite 25.3.3, Figur 1 * <br> --- | 1 | |
| A | IEEE TRANSACTIONS ON COMMUNICATIONS, Band COM-26, Nr. 8, August 1978, Seiten 1301-1307, IEEE, New York, US; C.T. BEARE: "The choice of the desired impulse response in combined linear-Viterbi Algorithm equalizers" <br> * Seite 1301, rechte Spalte, Zeilen 1-10; Seite 1302, linke Spalte, Zeilen 24-30; Seite 1302, rechte Spalte, Zeilen 14-20; Figur 1; Seite 1303, rechte Spalte, Zeile 20 - Seite 1304, linke Spalte, Zeile 24 * <br> --- | 1 | RECHERCHIERTE SACHGEBIETE (Int. Cl.4) <br><br> H 04 L |
| A | INTERNATIONAL CONFERENCE ON COMMUNICATIONS, ICC '82, Philadelphia, 13.-17. Juni 1982, Band 3, Seiten 6F.3.1-6F.3.6, IEEE, New York, US; T. AULIN et al.: "MSK-type receivers for partial response continuous phase modulation" <br> ----- | | |

Der vorliegende Recherchenbericht wurde für alle Patentansprüche erstellt

| Recherchenort | Abschlußdatum der Recherche | Prüfer |
|---|---|---|
| DEN HAAG | 29-08-1988 | VEAUX,C.J. |